# EUROPEAN PATENT SPECIFICATION

(11) **EP 0 873 781 B1**
(45) Date of publication and mention of the grant of the patent: **16.08.2001**
(21) Application number: 95941573.8
(22) Date of filing: 26.12.1995
(51) Int. Cl.: B01F 3/04, B01F 5/10, B01F 7/16

(54) **AN AGITATED REACTOR**
RUHREAKTOR
REACTEUR A AGITATION

(30) Priority: 28.12.1994 CN 94114060
(43) Date of publication of application: 28.10.1998
(73) Proprietor: Huang, Weimin, Shanghai 200438 (CN)
(72) Inventor: Huang, Weimin, Shanghai 200438 (CN)
(74) Representative: Altenburg, Udo, Dipl.-Phys.
(86) International application number: PCT/CN95/00101
(87) International publication number: WO 96/20041

(56) References cited:
- EP-A- 0 498 750
- JP-A- 62 011 539
- JP-A- 62 042 729
- JP-A- 63 031 562
- US-A- 4 155 657
- US-A- 4 378 436
- US-A- 5 176 447
- PATENT ABSTRACTS OF JAPAN vol. 010, no. 350 (C-387), 26 November 1986 & JP 61 149269 A (HITACHI METALS LTD), 7 July 1986,
- PATENT ABSTRACTS OF JAPAN vol. 014, no. 306 (C-0735), 3 July 1990 & JP 02 104270 A (KIRIN BREWERY CO LTD), 17 April 1990,

## Description

### Field of the Invention

The present invention relates to a kind of agitated vessel which covers the agitated vessel for dispersing gas, liquid and solid phase media is hard to mix or dissolve liquid phase to carry out mixing, extracting and dissolving operations, the agitated reactor for monophase or multiphase chemical reaction or polymerization in which the reaction rate is rather slow (controlled by diffusion) between or among media, and the agitated fermentation tank for anaerobic or aerobic bacteria fermentation during biochemical fermentation process.

### Background of the Invention

The agitated vessel is an important unit operating equipment in chemical, biochemical and other engineerings. Presently, agitated vessels are generally stirred by one stage or multistage mechanical impellers to provide homogeneous mixing, dispersing, suspending and emulsifying to materials and thus to strengthen mass - transfer, heat - transfer, chemical reaction and biochemical reaction processes. However, although the impellers of conventional agitated vessels have been improved significantly, and disk radial turbine type, axial propeller type, scissor type or three-vane-sweepback blades or like have been developed, the basic flow of materials during stir still consists of vortex flow with the impeller shaft as vortex center, and vortex ring with circumferential streamline between solid vortex nucleus zone and vessel wall as vortex nucleus, i.e., axial circulation of vortex ring flow on vertical plane. Besides, although combination of different impeller stage numbers and different impeller types can be used, and even supplemented by accessories as baffles and draft tube, only the magnitude of the relative static solid vortex nucleus zone and the shape, size and number of vortex rings may be changed. Because the streamline of the above two kinds of vortex is perpendicular or almost perpendicnlar to the velosity gradient, temperature gradient and concentration gradient, its effect on convection heat-transfer and mass-transfer is zero, hence the heat - transfer and mass-transfer in vortex nucleus will mainly rely on molecular diffusion. For instance, in the diffusion controlled nitrofication reaction of furacillin and reduction reaction of nitrobenzene, when the reaction heat at the vortex nucleus is unable to be effectively removed by stirring with conventional equipment and out of control, reactants will explode, whereas the nonuniformity in temperature will result in increasing by - products. In the polymerization reaction of polyvinyl chloride, the reaction heat is also difficult to be removed from the vortex nucleus even in suspended and emulsified solution, and the nonuniformity in temperature will lead to low productivity and difficulty in quality control. In biological reaction tanks such as those for fermentation, due to a difficult replenishment of oxygen required for aerobic fermentation in the vortex nucleus and a difficult removal of heat, the metabolism of bacteria is usually affected and thus the product quantity is seriously decreased.

To sum up, the conventional agitated vessels can only rely on increasing the number of stirring impeller stages, decreasing vortex ring diameter and/or enlarging blade diameter and raising stirring rate, to achieve high shearing flow zone around blades and near the wall and to increasee (or decrease) concentration and to raise (or to drop) temprature in the outmost streamline of vortex rings by turbulent diffusion. In this way, it is possible to raise the total amount of heat -transfer or mass-transfer, but impossible to raise tangibly and effectively the overall coefficient of heat - transfer or mass- transfer. Obviously, the conventional agitated vessels are poor in homogeneity of mixing, low in gloss coefficients of heat - transfer and mass - transfer, high in energy consumption, low in productivity and unstable in quality of products. In the China Patent 87101299.5, a kind of fermentation tank is disclosed, which uses gas jet and venturi tube to mix gas and liquid and utilize mechanical energy of gas flow tangential velocity to lower the stirring power. However, the said patent is 1) nicessary to work under the designed working condition, otherwise would obviously lower the mixing effect, and thus poor in operation flexibility; 2) unable to improve axial circulation of materials in the tank; 3) complex in structure and difficult in cleaning; 4) unable to improve homogeneity effectively.

From JP 02 104 270 A and JP 61 149 269 an agitated vessel is known comprising only a single central static mixer or swirler.

### Contents of the Invention

In view of the above - mentioned deficiencies, the object of the present invention is to provide a kind of agitated vessel which is able to introduce axial cycling flow effectively and improve stirring homogeneity significantly.

This object is achieved according to the invention by a vessel as defined in independent claims 1, 2 and 3. Advantageous embodiments of the invention are claimed in dependent claims 4 to 9.

In the agitated vessel of the present invention, due to the adoption of the static mixer or swirler, by the action of mechanical impeller or by the guiding flow action of outlet gas (liqind) jet of nozzle through collector, liquid material is agitated intensively in the mixer (s) of swirler(s) and the axial flow that is introduced by Tayor vortex column owing to the outflow of the static mixer or swirler can be intensified. The axial flow also drives a cycle flow in the tank, therefore produces effective convection mass - transfer and heat - transfer and raises the coefficients of dissolving oxygen, mass - transfer and heat-transfer and the reaction rate controlled by diffusion. Thus the stage number and diameter of blade and the revolution rate of impeller can be reduced, so that the effect of energy-saving and production-increasing will be significant.

### Brief description of appended drawings

Figure 1 is a schematic diagram showing the relative position of static mixers or swirlers mounted in the agitated vessel with impeller blades;
Fegure 2 is a schematic diagram of the agitated vessel in which one story of nozzles and static mixers or swirlers coordinates with three stages of mechanical impellers: (a) Axial flow propeller; (b) Bottom radial turbine impeller and upper axial propeller; (c) Radial turbine impeller;
Figure 3 is a schematic diagram of the agitated vessel in which one story of nozzles and static mixers or swirlers arranged in two circles coordinates with two stages of mechanical impellers: (a) Axial flow propeller; (b) Radial turbine impeller; (c) Bottom radial turbine impeller and upper axial propeller;
Figure 4 is a schematic diagram of the agitated vessel in which two stories of nozzles and static mixers or swirlers coordinate with two stages of mechanical impellers;
Figure 5 is a schematic diagram of the agitated vessel in which one story of nozzles and static mixers or swirlers in two circles coordinates with one stage of mechanical impeller;
Figure 6 is a schematic diagram of the mounting angle of a static mixer or swirler: (a) Projection of mixer or swirler on horizontal cross -section; (b) Mixer or swirler makes an angle α with horizontal plane;
Figure 7 is a schematic diagram of a static mixer or swirler: (a) Kenics' static mixer; (b) Swirler; (c) Composite type static mixer; (d) Static mixer with a collector; (e) Static mixer with a collector and a guiding flow tube;
Figure 8 is (a) Schematic mounting diagram of nozzle and static mixer or swirler; (b) Sectional view of a converging nozzle; (c) Sectional view of a Laval nozzle;
Figure 9 is a schematic diagram of an auxiliary material liquid pumping system for nozzles working at the time of without continuous input of gas phase reaction media or during anaerobic fermentation: (a) Inside pump on tank top; (b) Inside pump at tank bottom; (c) Outside pump at tank bottom;
Figure 10 is a schematic diagram showing the coordinating use of downward nozzles and static mixers or swirlers with mechanical impellers;
Figure 11 is a schematic diagram showing that a static mixer or swirler with collector and guiding flow tube is arranged along the absloute fluid velosity direction of blade outlet: (a) Arrangement for a straight vane radial impeller; (b) Arrangement for a curved vane radial turbine impeller; (c) Arrangement for an axial propeller; (d) Arrangement for a radial turbine impeller;
Figure 12 is a schematic diagram showing that a nozzle and a swirler are connected in end -to -end mode: (a) Front view; (b) Top view;
Figure 13 is a sectional view showing that the exit of a nozzle is inserted in the guiding flow tube of a static mixer or swirler;
Figure 14 is a sectional view showing that an interconnection suction tube with opened hole(s) is disposed between a nozzle and a static mixer or swirler;
Figure 15 is a schematic diagram showing that nozzles arranged in the one-story-two-circle mode are mounted on a gas distributing box of the present invention: (a) Front view; (b) Top view.

### Preferred implement of the present invention

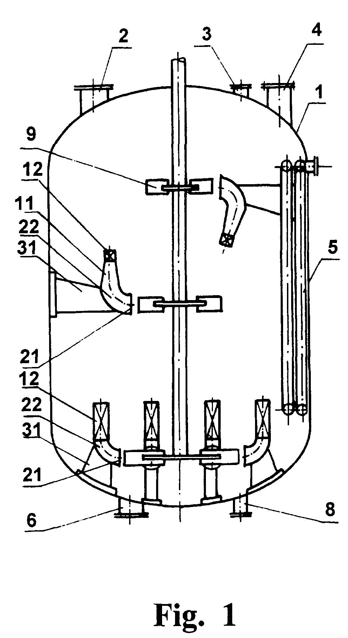

The agitated vessel shown in Figures 1, 2, 3, 4, 5, 9, 10 is a long cylindrical vessel with an exhaust outlet (2) at the top of a tank body (1), a reaction medium or bacteria nutrient liquid inlet (3), a man-hole (4) etc.; cooling or heating tube (5), or cooling or heating jacket are mounted on the inner wall of the tank body (1); liquid material inlet (6) and outlet as well as gas (liquid) inlet tube (7) are inserted from the bottom or wall of the tank body. The diameter of impeller blades (9) (10) in the same agitated vessel can be different. Static mixers or swirlers are mounted on supports (31) as shown in Figure 1.

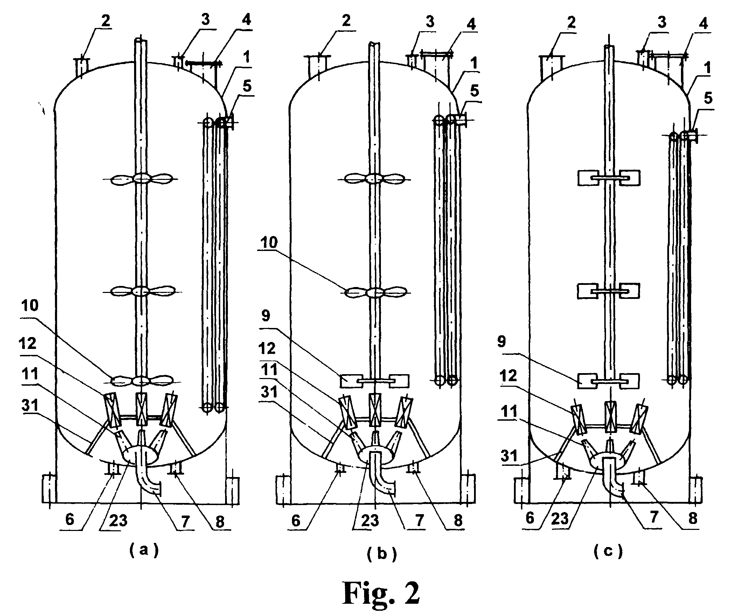

Referring to Figure **2**, it is clear how one story of nozzles (11) and the static mixers or swirlers (12) above the nozzles coordinate with three stages of mechanical impellers and how the internal axial cycle current flows: (a) Three stages being all axial propellers (10); (b) The bottom stage being radial turbine impeller (9) and the upper two stages being axial propellers (10); (c) Three stages being all radial turbine impellers.

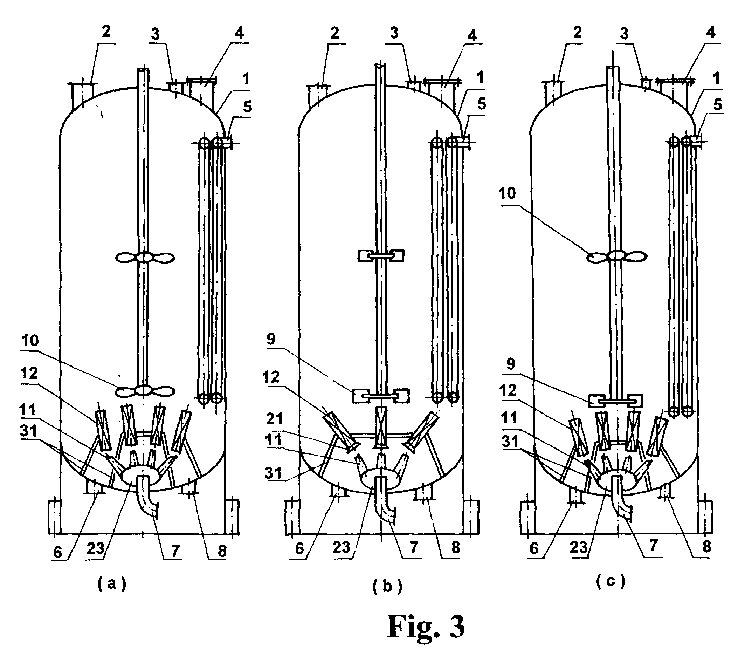

Referring to Figure **3**, it is clear how one story of nozzles (11) and the static mixers or swirlers (12) above the nozzles coordinate with two stages of mechanical impellers and how the internal axial cycle current flows: (a) One story two-circle nozzles (11) with static mixers or swirlers (12) above the nozzles and two stages of axial propellers (10); (b) Two stages of radial turbine impellers (9); (c) On story two - circle nozzles (11) and static mixers or swirlers (12) above the nozzles and bottom stage of radial turbine impeller (9), upper stage of axial propeller (10).

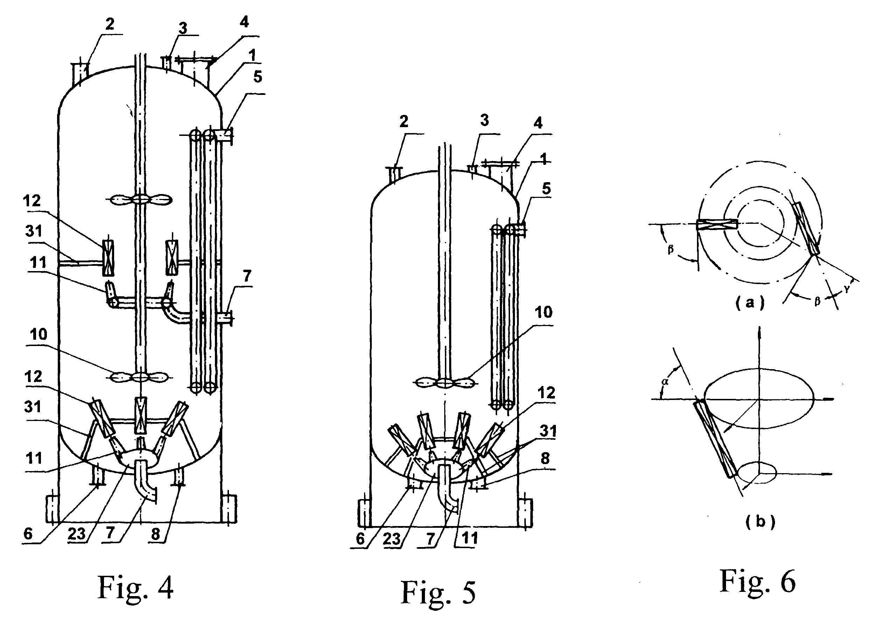

Referring to Figure 4, it is clear how two stories of nozzles (11) and static mixers or swirlers (12) above the nozzles (11) and static mixers or swirlers (12) above the nozzles coordinate with two stages of mechanical impellers (9). There is also a schematic diagram for the axial cycle currents pattern.

Referring to Figure 5, it is clear how one story two-circle nozzles (11) and static mixers or swirlers (12) above the nozzles coordinate with one stage mechanical impeller (9). There is also a schematic diagram for the axial cycle currents pattern.

Referring to Figure 6, it is clear about the spatial mounting angle of static mixers or swirlers.

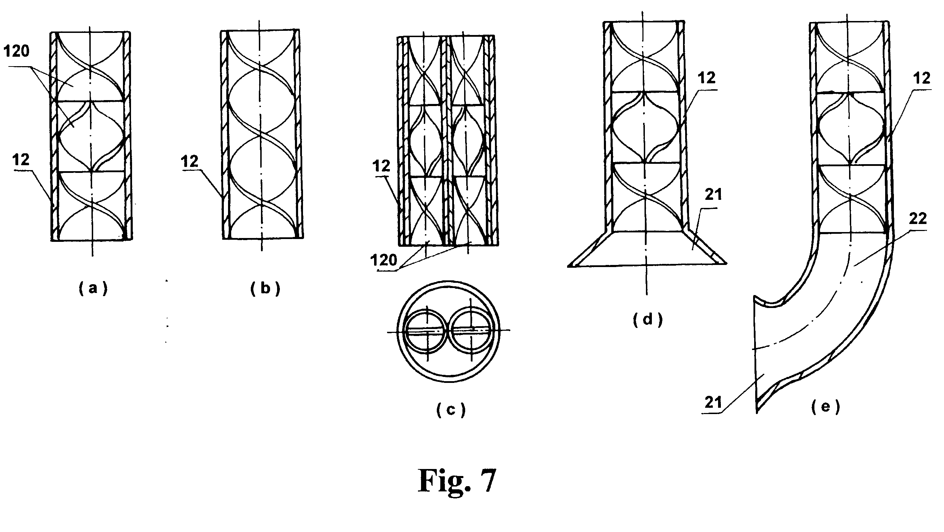

Referring to Figure 7, it is clear about the structures of a static mixer (a), (c) and a swirler (b), and the structure (d) of a collector (21), a static mixer (c) with collector and guiding flow tube (22), wherein, the static mixers can be of different types, and the number of elements (120) contained in each static mixer or swirler can be different, too.

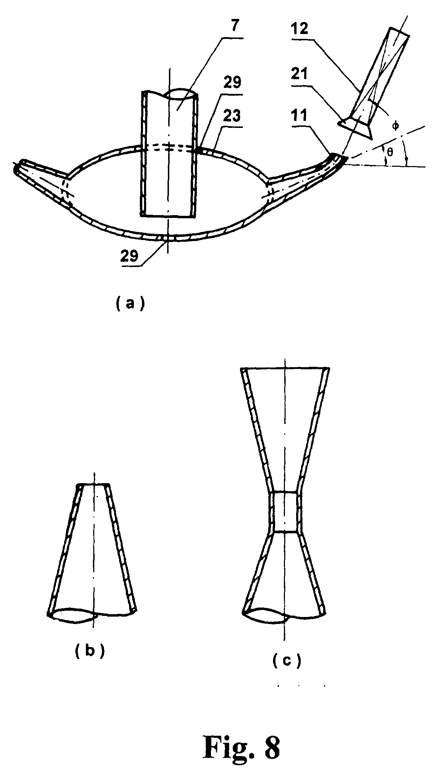

Referring to Figure 8, it is clear about the relative position and mounting mode for nozzles and static mixers or swirlers (12) in the tank, and the connection of gas distributing box (23) with a gas supply main tube (7) and nozzle (11), as well as upper and lower slag eyes (29).

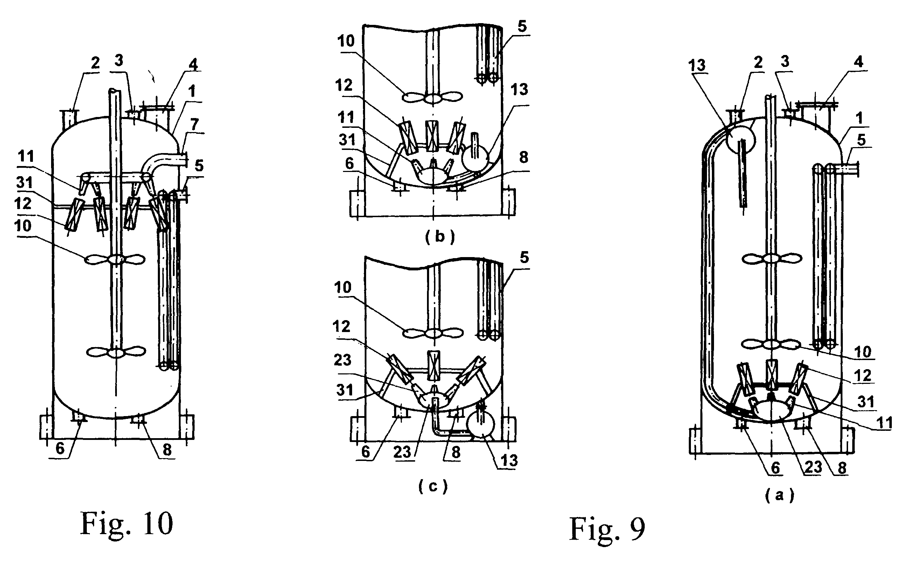

Referring to Figure 9, it is clear about the condition of auxiliary liquid material pumping system at the time of without continuous input of gas phase reaction media or during anaerobic fermentation: (a) with an inside pump (13) on top of the tank; (b) with an inside pump (13) at bottom; (c) with an outside pump (13).

Referring to Figure 10, it is clear how the downward nozzles (11) and static mixers or swirlers (12) under the nozzles coordinate with two stages of mechanical impellers (10) and how the internal axial cycle current flows.

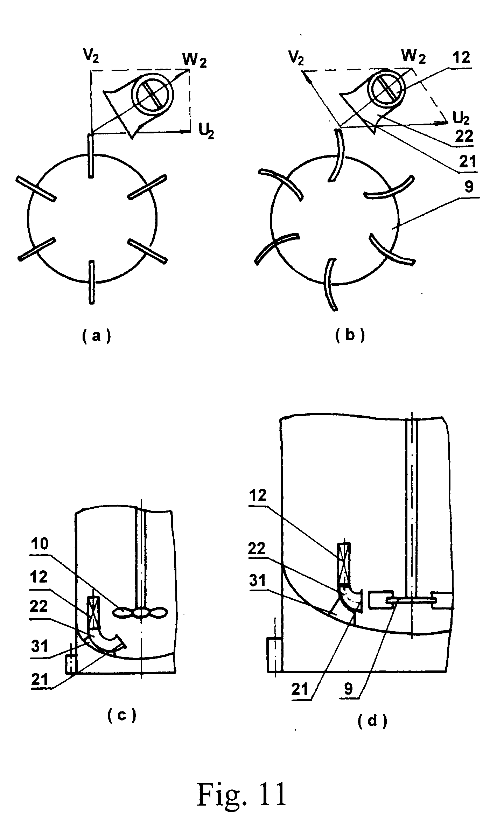

Referring to Figure 11, it is clear that when there is no nozzle, the mounting direction of the collector (21) for static mixer (12) ought to be along the absolute velosity direction of the blade outlet: (a) Redial turbine impeller with straight vane; (b) Radial turbine impeller with curved vane; (c) Schematic mounting diagram for axial propeller in the tank; (d) Schematic mounting diagram for radial turbine impeller in the tank. The guiding flow tube (22) is used for smooth conveyance of fluid onto the mounting direction of the static mixer.

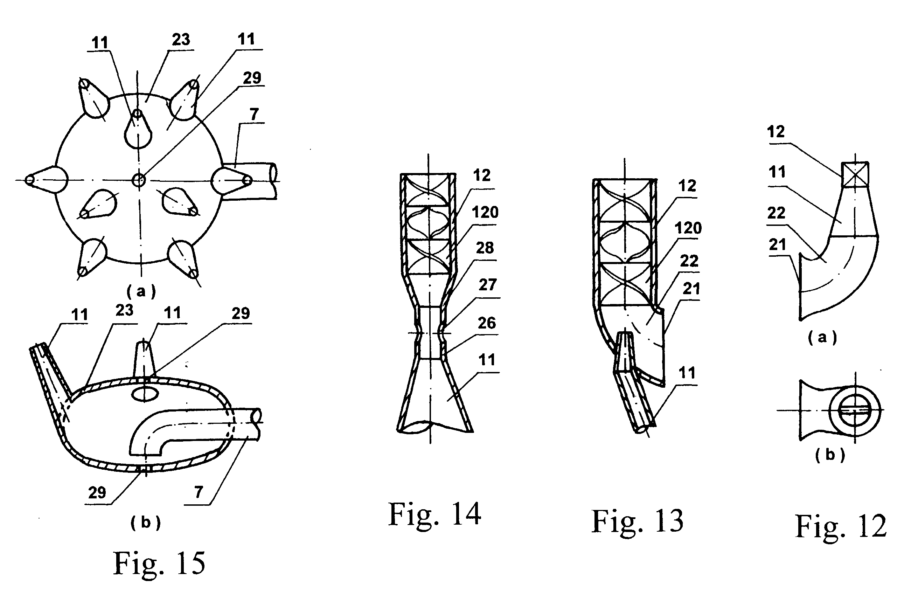

Figure 12 shows that the inlet of the swirler is connected with the outlet of the nozzle in an end - to - end mode.

Figure 13 shows that the exit of each nozzle can be inserted into the guiding flow tube of the static mixer or swirler.

Figure 14 shows that an interconnection suction tube (26) is provided between the nozzle and the static mixer or swirler, which is cylindrical and with one or more holes (27) opened on its wall.

Figure 15 shows that the nozzles (11) can be mounted on a gas distributing box (23) of the present invention: (a) Top view of the gas distributing box (23); (b) Sectional view of the gas distributing box and the arrangement of nozzles in one-story-two-circle mode.

### Industrial applicability

According to different process requirements of mixing, dissolving, extracting, reaction or fermentation for different media such as air, oxygen, nitrogen, carbon dioxide, reaction gas, inert gas or liquid material in the tank for cyclical use which can be jetted by nozzles, either nozzles and static mixers (or swirlers) or static mixers (or swirlers) connected to collector and guiding flow tube are coordinated with mechanical impeller in the agitated vessel of the present invention; both result in increasing the coefficients of mixing, dissolving (or oxygen dissolving), mass - transfer and heat-transfer and the reaction tate controlled by diffusion. By means of reducing stage numbers of impeller and diameter of blades and adopting variable - frequency power supply or gearboxes for controlling shaft revolution rate in large range, it is possible to obtain considerable effects of saving agitation power and increasing productivity. For agitated vessels of very large volume (with three stages of mechanical impeller, it is preferable to adopt an installation as shown in Figure 2 (a) and an installation as shown in Figure 10, i.e., change the three stages to two stages of mechanical impeller with the diameter of upper stage blade reduced and with nozzles and static mixers or swirlers arranged in one-story-two-circle mode (their type, structure and size depending on media and process requirements). Under the condition of without continuous input of gas phase media (including anaerobic fermentation), it is preferable to adopt an agitated vessel in which static mixers or swirlers with collector and guiding flow tube are used in coordination with mechanical impeller as shown in Figure 11. By using variable -frequency power supply to control revolution rate of the shaft, significant effect can be reached in energy saving and production - increasing.

For instance, in the application of the agitated vessel of the present invention for suspended polymerization of polyvinyl chloride, raw materials of chloroethylene monomer, initiator, etc. are stirred in water after being put into the agitated vessel, and polyvinyl chloride is produced through polymerization. The volume of the agitated vessel is 50 m³, in which the baffles can be eliminated. At the lowest stage of the agitated vessel, a disk type radial turbine impeller (9) with six curved - back blades can be used. At the second and third stages, scissors type impeller with six blades can be used. The diameter of the second stage blade is reduced by 1/3, while the diameter of the third stage blade is reduced by 1/2. On the bottom support (31) of the agitated vessel, six kenics' static mixers (12) with guiding flow bube (22) and collector (21) are provided, each kenics' static mixer contains three elements (120) with a diameter larger than 15 mm. The clearance between the collector (21) and the blade (9) is larger than the transversal swing distance of the shaft and the collector is directed against the absolute velosity of the blade outflow.

The chloroethylene monomers in water under high shearing rate are in suspended state. In addition to the liquid current circulation as in conventional agitated vessel, they are collected by collector (21) aligning the blade outflow at the lowest stage impeller and through the guiding flow bube (22), then the radical and circle flow become axial. Water and monomers are further mixed and dispersed, and the outflow at the mixer outlet becomes axial swirling flow which induces stable Taylor vortex column in the entire height of liquid material in the vessel under the centrifugal force field. The said vortex column provides effective axial convection and heat-transfer convection toward. the said vortex column. The total heat-transfer coefficient can be raised 2 ∼ 3 times, the agitating power is reduced at least by 1/3 and may be further reduced through slowing down the revolution rate of shaft. The chloroethylene mononer concentration is increased by 10 ∼ 20%, the polymerization rate raised by 5 ∼ 10%. The output is significantly raised. Meanwhile, due to a decrease of monomer retrieving amount, laborious work and time for cleaning sticking vessel, the utilization of the vessel is distinctly raised. The decrease of sticking vessel also improves the product quality. Moreover, due to a distinct increase of temperature homogeneity, it is possible to control the polymerization degree and molecular weight distribution effectively.

In the application of the agitated vessel of the present invention for biological fermentation, raw materials of fermentation liquor, bacteria strain, etc. are put into the tank. In the agitated vessel of 50 m³ are mounted three stages of disk type radial turbine impeller (9) with six curved - back blades, Ø900 mm, a stirring electric motor of 115kW, and the air consumption is 30 m³/min. The volume of the said raw materials is 43 m³, the average fermentation time adopted is 233 hours. There are six nozzles mounted on the gas distributing box at the bottom of the tank. In front of each nozzle (11) is provided a Kenics' static mixer (12) with six elements mounted on the support (31) at the bottom of the tank. There is a collector (21) at the inlet of the static mixer. The diameter of the first stage blade is reduced by 1/5, that of the second stage by 1/3 and that of the third stage by 1/2. The revolution rate of stirring is controlled by a variable-frequency supply power. The revolution rate is slowed down by 15% on average during fermentation period. In addition to the dissolving oxygen action in conventional fermentation tank by means of liquid circulation currents and of the shearing raw materials, not only the air from air inlet main tube of the air distributing box is jetted toward static mixers at high velosity to introduce fermentation liquid flowing into the said mixers and is mixed fully with fermentation liquid in mixers so that the coefficient of dissolving oxygen can be raised considerably and saturation can be reached at the outlet of mixers, but also the Taylor vortex columns induced in entire liquid height of the tank by the said outflow of mixers result in effective axial convection and convectional mass - transfer (oxygen transfer) flowing into the said columns. The total coefficient of dissolving oxygen can be raised by 2 ∼ 3 times. The liquid materials flowing to the liquid surface and the air which does not overflown will still be cycled in the tank by impeller. By adopting the agitated vessel of the present invention, the stirring power can be lowered by 67%, the gibberellin output increased by 16.15% and air saved by 20%.

## Claims

1. Agitated vessel comprising a tank body (1), an electric motor, a mechanical blade type impeller (9, 10) and process pipelines comprising more than one static mixer or swirler (12), characterised in that the inlet of the mixers or swirlers (12) or the inlet of a collector (21) or a collector (21) with a guiding flow tube (22) connected therewith which is provided at the inlet of the mixers or swirlers (12) is directed against the direction of absolute velocity of the mechanical impeller's blade (9, 10) outflow.

2. Agitated vessel comprising a tank body (1), an electric motor, a mechanical blade type impeller (9, 10) and process pipelines, characterised in that one story of nozzles (11) in one or more circles are provided within the vessel with each nozzle outlet being directed against a static mixer or swirler (12) or against a collector (21) or against a collector (21) with a guiding flow tube (22) connected therewith of the static mixer or swirler (12).

3. Agitated vessel comprising a tank body (1), an electric motor, a mechanical blade type impeller (9, 10) and process pipelines, characterised in that one story of nozzles in one or more circles are provided within the vessel with each nozzle outlet being inserted into a guiding flow tube (22) mounted at the inlet of correspondingly arranged static mixers or swirlers (12).

4. Agitated vessel according to one of the claims 1 to 3, characterised in that around the blades (9, 10) of each mechanical blade type impeller one or more stories of static mixers or swirlers (12) are mounted, each story has one to ten static mixers or swirlers (12) and the static mixer (12) is preferably kinic's mixer with 2 ∼ 10 elements.

5. Agitated vessel according to one of the claims 1 to 4, characterised in that the outflow direction of the static mixers or swirlers (12) at the bottom of the tank (1) takes an angle α of 4° ∼ 160° with the horizontal plane, at other positions, for instance, in the middle or upper parts of the tank, α is -160°∼ -4° (negative sign means downward flow) or 4° ∼ 90° with optimal outflow direction being 30° ∼ 90° or -110° ∼ -60°, both the angle β between the projection of the static mixer or swirler (12) on the horizontal transversal cross section and the circumferential tangent at the outlet and the angle γ between the projection of the static mixer or swirler (12) on the horizontal transversal cross section and the radius r of the said circumference can be 0 ∼ 90°.

6. Agitated vessel according to one of the claims 2 to 5, characterised in that the exit of the nozzles (11) is in circular or elliptic shape, with a major - minor axis ratio being 1:1 ∼ 1:5 and the angle θ between the mounting angle direction of nozzles (11) and the horizontal plane being 5° ∼ 90°.

7. Agitated vessel according to one of the claims 2 to 6, characterised in that the nozzles (11) are mounted on a gas distributing box (23) connected to a gas or liquid main supply tube (7), the said gas or liquid distributing box (23) being a hollow spheroidal or ellipsoidal vessel with a major - minor axis ratio of 1:1 ∼ 1:20, the said gas main supply tube (7)being inserted in from minor axis and down direction or from major axis direction, whereby the nozzles (11) are distributed on the spheroidal or ellipsoidal surface, where one or more slag eyes (29) open up and down.

8. Agitated vessel according to one of the claims 1 to 7, characterised in that when there is no continuous input of gas phase reaction media into the tank body (1), a liquid material cycle pumping system (13) or a system for cycling inert gas is provided in the tank body (1) under or above liquid surface or outside the tank body (1) (Figs. 9a, b, c).

9. Agitated vessel according to claim 2 or one of claims 4 to 8, characterised in that the inlet end of the swirler (12) is connected to the outlet end of the nozzle (11) in an end-to-end mode (Fig. 12).

## Patentansprüche

1. Ein Rührwerk, das aus einem Tankkörper (1), einem elektrischen Motor, einem Impeller mit mechanischen Rührflügeln (9, 10) und der technologischen Rohrleitung besteht, ist dadurch gekennzeichnet, dass es mit mehr als einem statischen Mischer oder Wirbler (12) versehen ist, und dass der Einlauf des erwähnten statischen Mischers oder Wirblers (12) oder ein hiermit am Einlauf des erwähnten statischen Mischers oder Wirblers (12) verbundener Kollektor (21) oder der Einlauf eines Kollektors (21) mit einem Führungsrohr (22) in der Richtung gegen die Richtung der absoluten Geschwindigkeit der mechanischen Rührflügeln (9, 10) abfließt.

2. Ein Rührwerk, das aus einem Tankkörper (1), einem elektrischen Motor, einem Impeller mit mechanischen Rührflügeln (9, 10) und der technologischen Rohrleitung besteht, ist dadurch gekennzeichnet, dass es mit einem Stockwerk von Düsen (11) versehen ist, die in mehr als einem Kreis angeordnet sind, und dass der Ablauf jeder Düse entweder gegen den Einlauf des statischen Mischers oder Wirblers (12) oder gegen den am Einlauf des erwähnten statischen Mischers oder Wirblers (12) verbundenen Kollektor (21) oder den Einlauf eines Kollektors (21) mit einem Führungsrohr (22) gerichtet ist.

3. Ein Rührwerk, das aus einem Tankkörper (1), einem elektrischen Motor, einem Impeller mit mechanischen Rührflügeln (9,10) und der technologischen Rohrleitung besteht, ist dadurch gekennzeichnet, dass es mit einem Stock von Düsen (11) versehen ist, die in einem oder mehr als einem Kreis angeordnet sind, und dass der Ablauf jeder Düse in das am Einlauf des entsprechend angeordneten statischen Mischers oder Wirblers (12) montierte Führungsrohr (22) eingesetzt ist.

4. Ein Rührwerk nach einem der oben erwähnten Patentansprüche 1 - 3 ist dadurch gekennzeichnet, dass rund um die mechanischen Rührflügeln (9, 10) jedes Impellers mit mechanischen Rührflügeln ein oder mehr als einem Stock von statischen Mischern oder Wirblern (12) montiert ist und jeder Stock 1 - 10 statische Mischer, vorzugsweise Kinic's-Mischer mit 2 - 10 Elementen, oder Wirbler (12) hat.

5. Ein Rührwerk nach einem der oben erwähnten Patentansprüche 1 - 4 ist dadurch gekennzeichnet, dass die Abflussrichtung des statischen Mischers oder Wirblers (12) am Boden des Tankkörpers (1) in bezug auf Horizontalebene einen Winkel α = 4° ∼ 160°, an anderer Stelle, z.B. mitten oder oben, einen Winkel α = -160° ∼ - 4° (Minuszeichen bedeutet die Abflussrichtung nach unten) bildet, dabei 30° ∼ 90° oder -110° ∼ -60° die optimale Anflussrichtung darstellt, und sowohl der Winkel β zwischen der Projektion des statischen Mischers oder Wirblers (12) auf dem horizontalen Querschnitt des Ablaufs und der Tangente der Peripherie am Ablauf als auch der Winkel γ zwischen der Projektion des statischen Mischers oder Wirblers (12) auf dem horizontalen Querschnitt des Ablaufs und dem Radius r der erwähnten Peripherie 0° ∼ 90° betragen kann.

6. Ein Rührwerk nach einem der oben erwähnten Patentansprüche 2 - 5 ist dadurch gekennzeichnet, dass die Auslaufsöffnung der Düse in Form von einem Kreis oder einer Ellipse mit einem Verhältnis der Haupt- zu Nebenachse von 1:1 ∼ 1:5 ausgebildet ist, und der Einbauwinkel der Düse in bezug auf Horizontalebene 5° ∼ 90° errechnet werden kann.

7. Ein Rührwerk nach einem der oben erwähnten Patentansprüche 2 - 6 ist dadurch gekennzeichnet, dass die Düse (11) an einem mit der Gas/Flüssigkeits-Hauptleitung (7) in Verbingdung stehenden Gas/Flüssigkeits-Verteiler (23) in Form von einem hohlen Ellipsoid mit einem Verhältnis der Haupt- zu Nebenachse von 1:1 ∼ 1:20 eingebaut ist, und dass die erwähnte Gas/Flüssigkeits-Hauptleitung (7) vom oberen oder unteren Ende der Nebenachse oder in der Richtung der Hauptachse eingesteckt werden kann, und die Ellipsoidoberfläche ein oder mehr als ein nach oben oder unten offenes Schlackenabstichloch (29) aufweist.

8. Ein Rührwerk nach einem der oben erwähnten Patentansprüche 1 - 7 ist dadurch gekennzeichnet, dass außerhalb oder innerhalb des Tanks oder über der Flüssigkeitsoberfläche ein Umlaufpumpensystem (13) für flüssigen Stoff oder ein Umlaufsystem für inertes Gas vorgesehen werden soll, wenn kein gasförmiges Reaktionsmedium ununterbrochen in das Tankkörper einfließt, siehe Abb. 9a, b und c.

9. , Ein Rührwerk nach dem Patentanspruch 2 oder nach einem der oben erwähnten Patentansprüche 4 - 8 ist dadurch gekennzeichnet, dass das Einlaufende des Wirblers (12) und das Ablaufende der Düse (11) in Form der Stoßverbindung miteinander zusammengefügt werden.

## Revendications

1. Récipient d'agitation, comportant un corps de tank (1), un moteur électrique, un agitateur à pale méchanique (9,10) et des conduits de processus, caractérisé par le fait qu'il comporte encore plus d'un mixeur statique ou séparateur à cyclone (12) et l'entrée dudit mixeur statique ou dudit séparateur à cylone (12) ou l'entrée d'un collecteur (21) ou d'un collecteur (21) avec un tuyau de guidage de flux (22) raccordé à l'entrée de mixeur statique ou de séparateur à cyclone (12) est braqué sur l'écoulement dans la direction de vitesse absolue des lames de pale d'agitation méchanique (9,10).

2. Récipient d'agitation, comportant un corps de tank (1), un moteur électrique, un agitateur à pale méchanique (9,10) et des conduits de processus, caractérisé par le fait que le récipient est pourvu encore d'un étage de jets (11) arrangés en un cercle ou plus d'un cercle et la sortie de chaque jet se braque sur l'entrée de mixeur statique ou de séparateur à cyclone (12) ou l'entrée de collecteur (21) ou de collecteur (21) avec un tuyau de guidage de flux (22) raccordé à l'entrée de mixeur statique ou de séparateur à cyclone (12).

3. Récipient d'agitation, comportant un corps de tank (1), un moteur électrique, un agitateur à pale méchanique (9,10) et des conduits de processus, caractérisé par le fait que le récipient est pourvu encore d'un étage de jets (11) arrangés en un cercle ou plus d'un cercle et la sortie de chaque jet est inserée dans un tuyau de guidage de flux (22) installé à l'entrée de mixeur statique ou de séparateur à cyclone (12) correspondantement arrangée.

4. Récipient d'agitation selon l'une des revendications 1 à 3, caractérisé par le fait qu'autour de chaque agitateur à pale méchanique (9,10) est installé un étage ou plus d'un étage de mixeurs statiques ou de séparateurs à cyclone (12), chaque étage possède 1 à 10 mixeurs statiques ou séparateurs à cyclone, et de préférence le mixeur statique est un Kinic's mixeur avec 2 à 10 unités.

5. Récipient d'agitation selon l' une des revendications 1 à 4, caractérisé par le fait que la direction de mixeur statique ou de séparateur à cyclone (12) au fond du corps de tank (1) prend avec le plan horizontal un angle α de 4°―160° et dans une autre position, par exemple, à la partie moyenne ou supérieure du corps de tank, l'angle α est pris de -160°―-4° ( le signe négatif signifie un flux en bas ) ou 4°― 90°, la direction préférable de l'écoulement est prise de 30°―90° ou de -110°―-60°. L'angle compris β entre la projection du mixeur statique ou du séparateur à cyclone (12) sur la section de coupure horizontale à sa sortie et la tangente du cercle à sa sortie ainsi que l'angle compris γ entre la projection du mixeur statique ou du séparateur à cyclone sur la section de coupure horizontale à sa sortie et le rayon r de ladite circonférence peuvent tous être de 0°-90°.

6. Récipient d'agitation selon l'une des revendications 2 à 5, caractérisé par le fait que la sortie du jets (11) est sous forme de cercle ou d'ellipse. Le ratio d'axe majeur et d'axe mineur est 1:1-1:5 et l'angle compris θ entre l'incidence de jets (11) et le plan horizontal est 5°-90°.

7. Récipient d'agitation selon l'une des revendications 2 à 6, caractérisé par le fait que les jets (11) sont installés sur une boîte de distribution de gaz (ou de liqueur) (23) reliée au tube principal d'alimentation en gaz (ou en liqueur) (7).Ladite boîte de distribution de gaz (ou de liqueur) est un récipient sphéroïdal-creux ou ellipsoïdal-creux avec son ratio d'axe majeur et d'axe mineur de 1:1-1:20. Ledit tube principal d'alimentation en gaz (ou en liqueur) (7) peut être inséré , soit à travers le dessus ou le dessous de l'axe mineur, soit le long de la direction de l'axe majeur, par lequel les jets (11) sont distribués sur la surface sphé roîdale ou ellipsoïdale où est ouvert en haut ou en bas un ou plus d'un orifice de coulée du laitier (29).

8. Récipient d'agitation selon l'une des revendications 1 à 7, caractérisé par le fait qu'un système de pompage de circulation d'alimentation liquide (13) ou un système de cyclage à gaz inerte est situé au-dessus ou au-dessous du niveau de fluide à l'intérieur ou à l'extérieur du corps de tank (1) (Fig. 9a,b,c), lors qu'il n'existe aucun chargement continu de médium pour la réaction de phase gazeuse dans le corps de tank (1).

9. Récipient d'agitation selon l'une des revendications 2 ou 4 à 8, caractérisé par le fait que l'extrémité de l'entrée de séparateur à cyclone (12) est raccordé au moyen de raccordement d'abouts à l'extrémité de la sortie de jet (11).
